# EUROPÄISCHE PATENTSCHRIFT

(11) **EP 1 180 812 B1**
(45) Veröffentlichungstag und Bekanntmachung des Hinweises auf die Patenterteilung: **07.11.2007**
(21) Anmeldenummer: 01119534.4
(22) Anmeldetag: 15.08.2001
(51) Int. Cl.: H01M 8/04

(54) **Brennstoffzellensystem**
Fuel cell system
Assemblage de cellules à combustible

(30) Priorität: 17.08.2000 DE 10040124
(43) Veröffentlichungstag der Anmeldung: 20.02.2002
(73) Patentinhaber: NuCellSys GmbH, 73230 Kirchheim/Teck-Nabern (DE)
(72) Erfinder: Haas, Isabel, 73230 Kirchheim (DE)
(74) Vertreter: Finkele, Rolf

(56) Entgegenhaltungen:
- DE-A- 19 945 323
- US-A- 3 716 415
- US-A- 5 366 818
- PATENT ABSTRACTS OF JAPAN Bd. 0111, Nr. 38 (E-503), 2. Mai 1987 (1987-05-02) & JP 61 277171 A (TOSHIBA CORP; others: 02), 8. Dezember 1986 (1986-12-08)
- PATENT ABSTRACTS OF JAPAN Bd. 0120, Nr. 99 (E-594), 31. März 1988 (1988-03-31) & JP 62 229768 A (SHIN KOBE ELECTRIC MACH CO LTD), 8. Oktober 1987 (1987-10-08)
- PATENT ABSTRACTS OF JAPAN Bd. 1999, Nr. 02, 26. Februar 1999 (1999-02-26) & JP 10 312821 A (SANYO ELECTRIC CO LTD), 24. November 1998 (1998-11-24)
- PATENT ABSTRACTS OF JAPAN Bd. 1999, Nr. 11, 30. September 1999 (1999-09-30) & JP 11 149932 A (SANYO ELECTRIC CO LTD), 2. Juni 1999 (1999-06-02)

## Beschreibung

Die Erfindung betrifft ein Brennstoffzellensystem gemäß dem Oberbegriff des unabhängigen Anspruchs.

Aus der DE 195 31 852 C1 ist ein Brennstoffzellensystem bekannt, bei dem ein Wasserabscheider zum Entfernen von Produktwasser vorgesehen ist. Der Wasserabscheider weist eine Regeleinrichtung in Form eines Ventils auf, das eine automatische Entleerung des Wasserabscheiders bewirkt.

Aus der US 5,366,818 ist es bekannt, Produktwasser aus dem anodenseitigen Abgas von Brennstoffzellen abzuscheiden. Die Abscheidung wird dabei mit Hilfe von Kühlwasser forciert, das in einem Wärmetauscher vor dem Eintritt in den Wasserabscheider abgekühlt wird. Abhängig von der Temperatur, auf die dieses Kühlwasser abgekühlt wird, kann die Abscheiderate im Wasserabscheider geringer oder größer eingestellt werden.

In der US 3,716,415 wird in einem Brennstoffzellensystem mit der Hilfe von Sensoren die Feuchtigkeit im Anodenabgas bestimmt. Über ein Ventil und eine Steuereinheit kann die Abscheiderate des Wassers dadurch eingestellt werden, dass mehr oder weniger Abgas über einen Kondensator bzw. durch einen Bypass um denselben geleitet wird.

In der JP 61277171 wird das Kathodenabgas einer Brennstoffzelle zunächst in einem Wärmetauscher gekühlt und dann einem Wasserabscheider zugeführt, um das Produktwasser zu entfernen.

Ähnlich wie in der o.g. US 5,366,818 wird auch hier über Temperatur- und Durchflussrate des Kühlmittels im Wärmetauscher die Temperatur des Abgasstroms und damit die Abscheiderate eingestellt.

Die JP 62229768 wird ebenfalls über einen Wärmetauscher der Abgasstrom gekühlt und das Produktwasser entsprechend auskondensiert. Die Temperatur des Wärmetauschers lässt sich hierbei über ein Gebläuse einstellen, welches Luft ansaugt und dies dem Wärmetauscher zwecks Kühlung des Abgases zuführt.

Vergleichbares gilt für die JP 10312821, welche ebenfalls ein Gebläse aufweist, welches Frischluft in den Bereich eines Kondensators bzw. eines Wärmetauschers fordert, um das Abgas entsprechend der gewünschten Auskondensation abzukühlen.

In der JP 11149932 ist ebenfalls ein Brennstoffzellensystem bzw. ein Abgasnachbehandlungsgerät beschrieben. In diesem Gerät wird ebenfalls über ein Gebläse Außenluft gefördert, um das Abgas entsprechend abzukühlen und über die Förderung des Luftstroms die Menge des aus dem Abgas abgeschiedenen Wassers einstellen zu können.

Der Erfindung liegt die Aufgabe zugrunde, ein Brennstoffzellensystem anzugeben, bei dem die Wasserabscheidung verbessert ist.

Diese Aufgabe wird bei einem Brennstoffzellensystem mit den Merkmalen des Anspruchs 1 gelöst.

Erfindungsgemäß sind stromauf oder in der Entwässerungseinrichtung Mittel zur Einstellung des Abscheidegrads von Wasser aus dem Medienabstrom angeordnet.

Üblicherweise wird ein Wasserabscheider so ausgelegt, daß bei einem bestimmten Betriebspunkt eine für den Wasserabscheider optimale Abscheiderate erzielt werden kann. Dies kann etwa einer bestimmten Strömungsgeschwindigkeit des zu entwässernden Mediums erfolgen. Der Wirkungsgrad der Entwässerungseinrichtung, d.h. die Abscheiderate, ist dabei herkömmlicherweise eine Funktion der Mediengeschwindigkeit. Die Mediengeschwindigkeit selbst ist jedoch abhängig von der Last der Brennstoffzelle. Bei Teillast ist die Mediengeschwindigkeit gering, bei Vollast hoch. Damit ergibt sich insgesamt eine Abscheiderate der Entwässerungseinrichtung, der vom Lastzustand der Brennstoffzelle abhängig ist. Gemäß der Erfindung kann die Abscheiderate aber nunmehr unabhängig von der Last eingestellt werden; die abgeschiedene Wassermenge kann dabei über die Drehzahl eines Lüfterrads bestimmt werden.

Der Vorteil ist dabei, daß der Medienstrom in jedem Lastbereich mit einer optimalen Strömungsgeschwindigkeit und/oder mit optimalem Strömungsweg in der Entwässerungseinrichtung geführt werden kann, so daß die Entwässerungseinrichtung einen hohen Wirkungsgrad erzielt.

Weitere Vorteile und Ausgestaltungen der Erfindung gehen aus den weiteren Ansprüchen und der Beschreibung hervor.

Die Erfindung ist nachstehend anhand einer Zeichnung näher beschrieben, wobei die Figur zeigt:

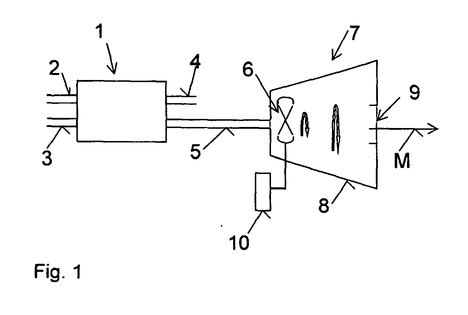

- Fig. 1: eine Prinzipdarstellung einer bevorzugten Vorrichtung.

In Fig. 1 ist eine Prinzipdarstellung als Ausschnitt eines bevorzugten Brennstoffzellensystems dargestellt.

Ein Brennstoffzellensystem weist zumindest eine Brennstoffzelleneinheit 1 auf. Die Brennstoffzelleneinheit 1 weist anodenseitige Medienzuführmitteln 2 zur Zuführung eines Brennmittels, z.B. Wasserstoffgas, und anodenseitige Medienableitmitteln 4 zur Ableitung eines Anodenabstroms, kathodenseitige Medienzuführmitteln 3 zur Zuführung eines Oxidationsmittels, z.B. Sauerstoff oder Luft, und kathodenseitige Medienableitmitteln 5 zur Ableitung eines Kathodenabstroms auf, etwa Wasser und Sauerstoff. Stromab der Brennstoffzelleneinheit 1 ist eine Entwässerungseinrichtung 7 zum Entfernen von Wasser aus einem Medienstrom M angeordnet. Die Entwässerungseinrichtung 7 ist vorzugsweise ein Wasserabscheider.

Die Entwässerungseinrichtung 7 gemäß der Erfindung kann vorteilhaft dort im System eingesetzt werden, wo Wasser aus einem Medienstrom entfernt werden soll. Sie kann stromauf oder stromab der Brennstoffzelleneinheit 1 vorgesehen sein.

Stromauf oder am Eingang oder im Eingangsbereich innerhalb der Entwässerungseinrichtung 7 sind Mittel 6, 10 zur Einstellung des Abscheidegrads des Wassers aus dem Medienstrom M angeordnet, wobei ein Lüfter 6 und Antriebsmittel 10 zum Antreiben des Lüfters 6 vorgesehen sind.

Gemäß der Erfindung treiben die Antriebsmittel 10 den Lüfter 6 lastabhängig an. Bei niedriger Last des Brennstoffzellensystems liegt ein geringerer Mediendurchsatz vor als bei Vollast. Vorzugsweise wird der Lüfter so angetrieben, daß bei jedem Lastbereich des Brennstoffzellensystems eine Strömungsgeschwindigkeit des Medienstroms M erzielt werden kann, bei dem der Wasserabscheider einen hohen Wirkungsgrad aufweist. Vorteilhaft ist, wenn die Strömungsgeschwindigkeit konstant, möglichst unabhängig von der Last an der Brennstoffzelle, eingestellt werden kann. Der feuchte Medienstrom M kann dann immer mit der Geschwindigkeit in den Wasserabscheider geführt werden, für die dieser optimiert ist und bei der er seinen optimalen Wirkungsgrad und seine optimale Abscheiderate hat.

Vorzugsweise wird der Lüfter 6 von einem Elektromotor angetrieben, der abhängig von der Last an der Brennstoffzelleneinheit die Drehzahl des Lüfterrads des Lüfters 6 ändert. Bei hoher Last, bei der die Anströmgeschwindigkeit des Medienstroms M hoch ist, kann die Drehzahl geringer sein als bei niedriger Last, so daß der Medienstrom M im wesentlichen bei Teillast beschleunigt wird.

Günstig ist, den wasserhaltige Medienstrom M in eine im Innern der Entwässerungseinrichtung 7 zirkulierende Bewegung zu versetzen. Dabei kann das im feuchten Medienstrom M mitgeführte Wasser sich am Gehäuse 8 der Entwässerungseinrichtung 7 niederschlagen und in einen nicht dargestellten Sammelbehälter geführt werden. Der effektive Weg des Mediums innerhalb der Entwässerungseinrichtung 7 wird dadurch verlängert; die Kondensationsfläche wird besser ausgenutzt. Zumindest bereichsweise kann das Gehäuse 8 als Kühlfläche zum Auskondensieren von Wasser aus dem Medienstrom M vorgesehen sein.

Vorteilhaft ist, wenn der lichte Querschnitt des Gehäuses 8 in Strömungsrichtung zunimmt. Es ist jedoch auch möglich, das Gehäuse so auszubilden, daß der lichte Querschnitt des Gehäuses 8 in Strömungsrichtung abnimmt oder konstant bleibt.

Zweckmäßigerweise ist die Entwässerungseinrichtung 7 im kathodenseitigen Medienableitmittel 5 angeordnet und/oder auch im Anodenabstrom und/oder in einem Strömungsweg des vereinigten Brennstoffzellenabgases, in dem Anodenabstrom und Kathodenabstrom zusammengeführt sind und/oder an anderen Stellen im Brennstoffzellensystem, an denen Medien entwässert werden sollen. Mit Vorteil wird das zurückgewonnenen Wasser zur Kathodenluftbefeuchtung und/oder Brennstoffzellenkühlung eingesetzt. Die Erfindung ist besonders für Brennstoffzellensysteme mit Polymerelektrolyt-Membran-Brennstoffzellen geeignet.

## Patentansprüche

1. Brennstoffzellensystem mit zumindest einer Brennstoffzelleneinheit (1), anodenseitigen Medienzuführmitteln (2) zur Zuführung eines Brennmittels und anodenseitigen Medienableitmitteln (4) zur Ableitung eines Anodenabstroms, kathodenseitigen Medienzuführmitteln (3) zur Zuführung eines Oxidationsmittels und kathodenseitigen Medienableitmitteln (5) zur Ableitung eines Kathodenabstroms und einer in dem Brennstoffzellensystem angeordneten Entwässerungseinrichtung (7) zum Entfernen von Wasser aus einem Medienstrom (M), wobei stromauf oder am Eingang oder im Eingangsbereich der Entwässerungseinrichtung (7) Mittel (6, 10) zur Einstellung der Abscheiderate des Wassers aus dem Medienstrom (M) angeordnet sind,
**dadurch gekennzeichnet,**
**dass** die Mittel (6, 10) zur Einstellung der Abscheiderate einen Lüfter (6) und Antriebsmittel (10) zum Antreiben des Lüfters (6) umfassen, mit dem der wasserhaltige Medienstrom (M) in eine im Innern der Entwässerungseinrichtung (7) zirkulierende Bewegung versetzbar ist.

2. Brennstoffzellensystem nach Anspruch 1,
**dadurch gekennzeichnet,**
**daß** die Antriebsmittel (10) zum lastabhängigen Antrieb des Lüfters (6) vorgesehen sind.

3. Brennstoffzellensystem nach Anspruch 1,
**dadurch gekennzeichnet,**
**daß** die Entwässerungseinrichtung (7) ein Gehäuse (8) aufweist, welches zumindest bereichsweise als Kühlfläche zum Auskondensieren von Wasser aus dem Medienstrom (M) vorgesehen ist.

4. Brennstoffzellensystem nach Anspruch 3,
**dadurch gekennzeichnet,**
**daß** der lichte Querschnitt des Gehäuses (8) in Strömungsrichtung zunimmt.

5. Brennstoffzellensystem nach Anspruch 1,
**dadurch gekennzeichnet,**
**daß** die Entwässerungseinrichtung (7) im anodenseitigen Medienabstrom (4) angeordnet ist.

6. Brennstoffzellensystem nach Anspruch 1,
**dadurch gekennzeichnet,**
**daß** die Entwässerungseinrichtung (7) im kathodenseitigen Medienabstrom (5) angeordnet ist.

## Claims

1. Fuel cell system having at least one fuel cell unit (1), media supply means (2) on the anode side for supplying a fuel and media discharge means (4) on the anode side for discharge of an anode outflow, media supply means (3) on the cathode side for supplying an oxidising agent and media discharge means (5) on the cathode side for discharge of a cathode outflow, and a dewatering device (7) arranged in the fuel cell system for removing water from a media stream (M), means (6, 10) being arranged upstream of or at the inlet or in the inlet area of the dewatering device (7) for adjusting the rate of separation of the water from the media stream (M), **characterized in that** the means (6, 10) for adjusting the separation rate comprise a fan (6) and drive means (10) for driving the fan (6), with which the water-containing media stream (M) may be set in circulating motion inside the dewatering device (7).

2. Fuel cell system according to Claim 1, **characterized in that** the drive means (10) are provided for load-dependent driving of the fan (6).

3. Fuel cell system according to Claim 1, **characterized in that** the dewatering device (7) comprises a housing (8), which is provided at least in part as a cooling surface for condensing water out of the media stream (M).

4. Fuel cell system according to Claim 3, **characterized in that** the internal cross section of the housing (8) increases in the direction of flow.

5. Fuel cell system according to Claim 1, **characterized in that** the dewatering device (7) is arranged in the anode-side media outflow (4).

6. Fuel cell system according to Claim 1, **characterized in that** the dewatering device (7) is arranged in the cathode-side media outflow (5).

## Revendications

1. Assemblage de cellules à combustible, comprenant au moins une unité de cellules à combustible (1), des moyens d'amenée de milieu côté anode (2) pour amener du combustible, et des moyens d'évacuation de milieu côté anode (4) pour évacuer un courant effluent d'anode, des moyens d'amenée de milieu côté cathode (3) pour amener un oxydant, et des moyens d'évacuation de milieu côté cathode (5) pour évacuer un courant effluent de cathode, et un dispositif de déshydratation (7) disposé dans l'assemblage de cellules à combustible pour éliminer l'eau d'un flux de milieu (M), dans lequel des moyens (6, 10) pour régler le degré de séparation de l'eau provenant du flux de milieu (M) sont disposés en amont ou à l'entrée ou dans la zone d'entrée du dispositif de déshydratation (7),
**caractérisé en ce que**
les moyens (6, 10) pour régler le taux de séparation comprennent une soufflante (6) et des moyens d'entraînement (10) pour entraîner la soufflante (6), qui permet d'appliquer au flux de milieu (M) hydraté un mouvement circulatoire à l'intérieur du dispositif de déshydratation (7).

2. Assemblage de cellules à combustible selon la revendication 1, **caractérisé en ce que** les moyens d'entraînement (10) sont prévus pour l'entraînement de la soufflante (6) en fonction de la charge.

3. Assemblage de cellules à combustible selon la revendication 1, **caractérisé en ce que** le dispositif de déshydratation (7) présente un boîtier (8) qui est prévu au moins localement comme une surface de refroidissement pour éliminer par condensation l'eau du flux de milieu (M).

4. Assemblage de cellules à combustible selon la revendication 3, **caractérisé en ce que** la section transversale intérieure du boîtier (8) augmente dans la direction d'écoulement.

5. Assemblage de cellules à combustible selon la revendication 1, **caractérisé en ce que** le dispositif de déshydratation (7) est disposé dans le flux de milieu effluent côté anode (4).

6. Assemblage de cellules à combustible selon la revendication 1, **caractérisé en ce que** le dispositif de déshydratation (7) est disposé dans le flux de milieu effluent côté cathode (5).
